# FASCICULE DE BREVET EUROPEEN

(11) **EP 0 696 978 B1**
(45) Date de publication et mention de la délivrance du brevet: **10.12.1997**
(21) Numéro de dépôt: 94912587.6
(22) Date de dépôt: 05.04.1994
(51) Int. Cl.: B62M 3/08, A43B 5/14

(54) **DISPOSITIF DE FIXATION D'UNE CHAUSSURE SUR UNE PEDALE, ET CHAUSSURE ET PEDALE EQUIPEES D'UN TEL DISPOSITIF**
VORRICHTUNG ZUR BEFESTIGUNG EINES SCHUHES AN EINEM FAHRRADPEDAL UND SCHUH UND PEDAL FÜR EINE DERARTIGE VORRICHTUNG
DEVICE FOR FASTENING A SHOE ON A PEDAL, AND SHOE AND PEDAL WITH SUCH A DEVICE

(30) Priorité: 10.05.1993 FR 9305561
(43) Date de publication de la demande: 21.02.1996
(73) Titulaire: DE LATTRE, Bertrand, F-75017 Paris (FR)
(72) Inventeur: DE LATTRE, Bertrand, F-75017 Paris (FR)
(74) Mandataire: CABINET BONNET-THIRION
(86) Numéro de dépôt international: FR9400376
(87) Numéro de publication internationale: WO9426582

(56) Documents cités:
- PATENT ABSTRACTS OF JAPAN, vol. 16, no. 034 (M-1204) 28 Janvier 1992 & JP,A,03 243 488 (SHIMANO) 30 Octobre 1991

## Description

La présente invention a pour objet un dispositif de fixation d'une chaussure sur une pédale, plus particulièrement adapté à la fixation d'une chaussure de cycliste sur une pédale de bicyclette, du type de sécurité, c'est-à-dire conçu de telle sorte que la désolidarisation de la chaussure et de la pédale est automatique en cas de chute, la résistance de la fixation étant prévue pour qu'il en soit ainsi.

L'invention s'applique à un dispositif de fixation d'une chaussure à une pédale qui comporte des moyens magnétiques solidaires de l'un au moins des deux organes constitués par la chaussure et la pédale, et des moyens métalliques magnétiques solidaires de l'autre au moins des deux dits organes. Les moyens métalliques magnétiques, qui sont des moyens métalliques constitués d'un métal magnétique, et qui coopèrent avec les moyens magnétiques, seront désignés ci-après par moyens métalliques pour faciliter l'exposé. Un tel dispositif comprend un nombre réduit de pièces il est léger et d'un entretien très aisé ; il permet au cycliste, lorsqu'il désire marcher avec les chaussures ainsi équipées, de pouvoir réaliser cette opération confortablement.

Bien entendu, un tel dispositif de fixation, tel que décrit par exemple dans le document JP-A-3 243 488, doit comporter en outre des moyens d'éloignement capables de provoquer l'éloignement d'un desdits organes par rapport à l'autre, pour provoquer mécaniquement ledit éloignement à l'encontre des forces magnétiques ; il s'avère que la solidarisation et désolidarisation en utilisation normale, d'une part, et la désolidarisation automatique en cas de chute, d'autre part, de la chaussure et de la pédale nécessitent une maîtrise de ces opérations à la fois en termes d'effort et de déplacement ; le dispositif décrit dans le document cité ci-dessus ne permet pas une telle maîtrise, et l'invention a pour but de pallier cet inconvénient majeur.

Selon l'invention, un dispositif de fixation d'une chaussure à une pédale comportant, d'une part, des moyens magnétiques destinés à être solidarisés à l'un des deux organes constitués par la chaussure et la pédale, et des moyens métalliques destinés à être solidarisés à l'autre des deux dits organes et à coopérer magnétiquement avec lesdits moyens magnétiques en vue de fixer magnétiquement la chaussure à la pédale, et, d'autre part, des moyens d'éloignement capables de provoquer l'éloignement d'un desdits organes par rapport à l'autre dans le sens d'une augmentation de l'entrefer magnétique, est caractérisé par le fait que lesdits moyens d'éloignement sont des moyens de rampes s'étendant circonférentiellement, destinés à être portés par l'un au moins desdits organes et placés de telle sorte qu'une rotation relative desdits organes provoque ledit éloignement.

Grâce à cette disposition, l'opération de désolidarisation est mieux maîtrisée, que ce soit automatiquement, en cas de chute, ou non, les moyens de rampes s'étendant circonférentiellement selon une surface cylindrique de révolution dont l'axe définit l'axe de rotation autour duquel les deux organes, la chaussure et la pédale, ont un mouvement relatif de rotation lors de leur désolidarisation, ledit axe coupant la zone de la chaussure sur laquelle l'utilisateur prend appui lors du pédalage. La préhension et le dégagement de la pédale par la chaussure sont dès lors rapides et aisés, ce qui présente un avantage dans l'application d'un tel dispositif de fixation à des cycles, notamment "tout terrain".

Des moyens de butée longitudinale et/ou transversale sont prévus entre la chaussure et la pédale.

Les moyens magnétiques sont portés par la chaussure.

En variante, les moyens magnétiques sont portés par la pédale.

Une plaque de protection recouvre les moyens magnétiques.

De préférence, des rampes de formes complémentaires sont solidaires de la chaussure et de la pédale.

Avantageusement, la pédale comprend une plaque métallique en métal magnétique ; la plaque métallique recouvre le fond d'une coupelle, ayant un bord cylindrique ; le bord cylindrique présente les rampes complémentaires des rampes portées par la chaussure.

Avantageusement, un jeu circonférentiel existe entre les rampes complémentaires.

La plaque métallique est solidaire d'un fourreau destiné à recevoir un axe de pédale.

Avantageusement, la plaque métallique est en forme de coupelle ayant un rebord cylindrique portant les moyens de rampes.

De préférence, la plaque de protection est conformée en pièce polaire ; la pièce polaire est munie de chanfreins.

Un anneau amagnétique entoure l'amant.

Les moyens de rampes sont portés par l'anneau amagnétique ; en variante, les moyens de rampes sont portés par la pièce polaire.

La semelle de la chaussure présente un élément de guidage.

Avantageusement, les moyens magnétiques portés par l'un des organes sont constitués d'une pluralité d'amants disposés parallèlement à l'axe transversal.

Les moyens magnétiques sont décalés circonférentiellement ainsi que les moyens métalliques qui leur font face.

La présente invention a également pour objet une chaussure et/ou une pédale destinées à être fixées par un tel dispositif de fixation.

Pour mieux faire comprendre l'objet de l'invention, on va en décrire, maintenant, à titre d'exemple purement illustratif et non limitatif, un mode de réalisation représenté sur les dessins annexés.

Sur ces dessins :
- la figure 1 est une vue générale schématique montrant une chaussure et une pédale équipées d'un dispositif de fixation selon l'invention ;
- la figure 2 est une coupe partielle à plus grande échelle de la chaussure de la figure 1 ;
- la figure 3 est une vue de dessous partielle de la chaussure, selon la ligne III-III de la figure 2 ;
- la figure 4 est une coupe de la pédale de la figure 1 ;
- la figure 5 est une vue de dessus de la pédale, selon la ligne V-V de la figure 4 ;
- la figure 6 montre en coupe partielle une autre variante du dispositif de fixation selon l'invention ;
- les figures 7 à 9 montrent différentes dispositions de moyens magnétiques équipant le dispositif de fixation selon l'invention ;
- la figure 10 montre partiellement une autre variante du dispositif de fixation selon l'invention ;
- la figure 11 est une vue en coupe partielle du dispositif de la figure 10, les deux organes étant assemblés ;
- la figure 12 est analogue à la figure 11, mais représente une variante ;
- la figure 13 est analogue à la figure 11, mais représente une autre variante ;
- la figure 14 est un schéma montrant le fonctionnement du dispositif de fixation selon la figure 11, les deux organes étant en cours d'assemblage ;
- la figure 15 est analogue à la figure 11 mais représente une autre variante ;
- la figure 16 est analogue à la figure 11 mais représente encore une autre variante ;
- la figure 17 est une vue partielle en coupe montrant des moyens de rampes du dispositif de fixation.

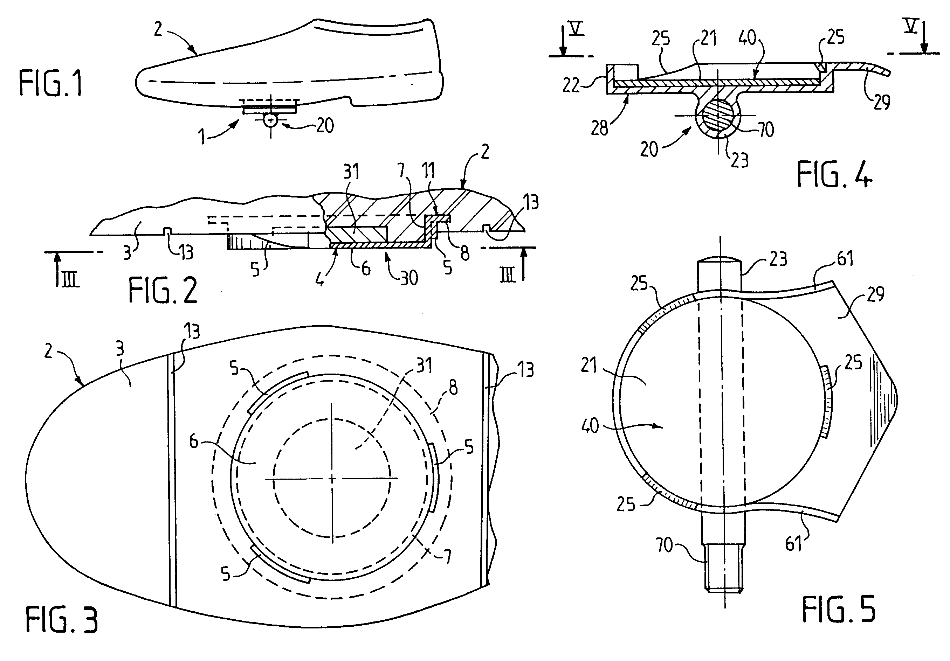

La figure 1 est une vue générale schématique montrant une chaussure de cycliste 2 et un dispositif de fixation 1 de la chaussure à une pédale 20, conforme à la présente invention.

Plus précisément, comme visible sur la figure 2 qui est une coupe partielle de la chaussure de la figure 1 à plus grande échelle, et sur la figure 3 qui est une vue selon III-III de la figure 2, la semelle 3 de la chaussure 2 porte, par surmoulage partiel, des moyens magnétiques 30 constitués ici d'un aimant 31, sous forme de pastille circulaire, réalisé par exemple par frittage d'un alliage métallique, comme un amant à base de Fer-Néodyme-Bore, de 2 à 3 mm d'épaisseur, ici 3 mm, et de 50 à 60 mm de diamètre, ici 55 mm ; la face de l'aimant 31 tournée vers l'extérieur est protégée par une plaque de protection métallique magnétique 4 en forme de cuvette circulaire ayant un fond 6, un rebord 7 et un retour annulaire 8 ; le rebord 7 et le retour 8 constituent une couronne annulaire 11 surmoulée dans la semelle 3 en sorte que seul le fond 6 affleure la surface extérieure de la semelle 3, ou la dépasse très légèrement : ainsi, une telle disposition rend très aisée la marche sur le sol ; un tel confort peut éventuellement être amélioré, si nécessaire, en prévoyant en amont et en aval de la plaque métallique 4 des rainures transversales 13 dans la semelle qui donnent à celle-ci plus de flexibilité pendant la marche. Dans l'exemple représenté, la couronne 11 est surmoulée dans la semelle 3 ; bien entendu, elle peut être solidarisée avec la semelle autrement : par vissage, par collage, ou autre moyen.

A la périphérie du rebord 7 de la plaque 4 sont prévues des rampes 5, de préférence au nombre de trois, s'étendant circonférentiellement, dont le rôle apparaîtra ci-après.

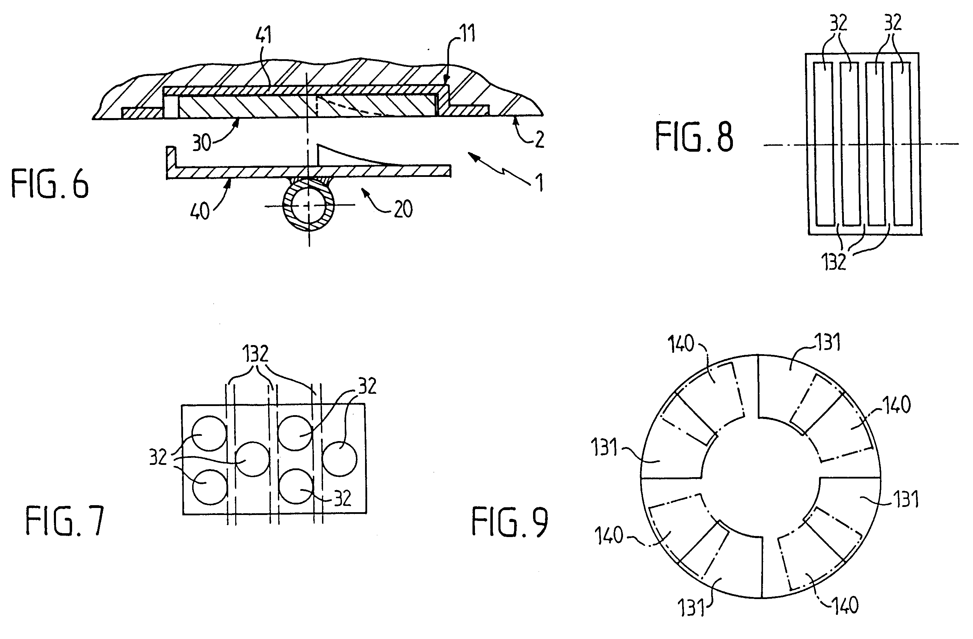

La chaussure 2 ainsi équipée est destinée à coopérer avec une pédale 20 montrée sur les figures 4 et 5 ; la pédale 20 comprend des moyens métalliques magnétiques 40 destinés à coopérer magnétiquement avec les moyens magnétiques 30 de la chaussure 2 ; ces moyens métalliques 40 sont, selon cette réalisation, constitués d'une plaque métallique 21, dont la forme générale est complémentaire de celle de la plaque de protection 4 de la chaussure 2. La plaque métallique 21 recouvre le fond d'une coupelle 28 en matière plastique ou autre de forme générale circulaire ayant un bord cylindrique 22 ; le bord 22 de la coupelle 28 présente des rampes 25, complémentaires des rampes 5 de la plaque 4 de la semelle de la chaussure. Sous le fond de la coupelle 28, un fourreau 23 est destiné à recevoir un axe de pédale 70 classique, connu en soi ; la section intérieure circulaire de la coupelle 28 au droit de son bord 22 est légèrement supérieure à la section extérieure de la couronne 11 de la chaussure au droit du rebord 7, dans la limite bien entendu de l'épaisseur radiale des rampes 5, 25 qui sont amenées à coopérer au moins partiellement en toute circonstance ; de même, les rampes 5, 25 ne sont pas rigoureusement complémentaires, un jeu circonférentiel existant entre les rampes 5 et les rampes 25 ; ainsi, un jeu de montage existe dans toutes les directions entre la chaussure et la pédale ; ce jeu, comme on le sait, est nécessaire pour faciliter un léger déplacement du pied pendant l'opération de pédalage et lui permettre une adaptation morphologique sans contrainte excessive. Pour faciliter la préhension de la pédale par l'utilisateur, la coupelle 28 est prolongée vers l'arrière par une queue 29 dont l'extrémité est légèrement courbée vers le bas, du côté du fourreau 23 ; latéralement, la queue 29 s'évase dans la direction perpendiculaire à l'axe du fourreau 23 en s'éloignant de celui-ci, des rebords latéraux 61 raccordés au bord cylindrique 22 facilitant l'approche de la chaussure. La présence de la queue 29 déséquilibre la pédale 20 par rapport à l'axe du fourreau 23 en sorte qu'au repos la pédale 20 s'étend dans un plan proche de la verticale, ce qui, comme on le sait, facilite la préhension de la pédale par l'utilisateur.

Le dispositif de fixation 1 selon l'invention fonctionne comme suit. La fixation entre la chaussure 2 et la pédale 20 étant de nature magnétique, elle est maximum dans le sens perpendiculaire à la plaque 21 de pédale, lorsque la distance entre les plaques 4 et 21, ou entrefer magnétique, est nulle : c'est la position qu'occupent le fond 6 de la plaque 4 de chaussure et la plaque 21 de pédale, au contact l'une de l'autre lorsque les moyens de rampes 5 et 25 coopèrent en s'épousant complètement ; dans cette position, comme on le sait, l'effort s'opposant au coulissement l'une de l'autre desdites plaques 4 et 21 est faible mais non nulle, ce qui permet de mettre à profit le jeu lors de l'opération de pédalage, comme expliqué ci-dessus, et d'éviter de disposer de moyens élastiques de rattrapage de ce jeu ; pour quitter la pédale 20, il suffit que le pied effectue une rotation de quelques degrés, une dizaine par exemple, pour que, l'entrefer magnétique croissant de par l'effet des rampes 5, 25, l'effort d'attraction magnétique diminue fortement et autorise facilement le pied à quitter la pédale 20. Bien entendu, l'effort d'attraction maximale peut être réglé en changeant la nature de l'aimant, ou en disposant des cales non magnétiques d'entrefer de différentes épaisseurs, ou en réalisant la plaque de protection en un matériau non magnétique ; il est possible également de rendre cet effort réglable à l'aide de trois vis micrométriques vissées dans l'un des deux organes, s'étendant dans l'entrefer, et définissant celui-ci.

On notera que le dispositif de fixation 1 selon l'invention est d'une grande simplicité, très léger et qu'en outre il assure un dégagement automatique immédiat en cas de chute, faisant ainsi partie de la catégorie des dispositifs de fixation dits automatiques.

Selon la figure 2, la plaque 4 et la couronne 11 portées par la chaussure sont d'une seule pièce ; selon une variante non représentée, la plaque 4 de protection de l'aimant 31 et la couronne circulaire 11 qui porte les rampes 5 de la chaussure sont deux pièces distinctes ; ceci permet de conformer la plaque 4 de protection indépendamment de la couronne circulaire 11, laquelle couronne 11 est indépendante du circuit magnétique et peut être en matériau amagnétique et/ou avantageusement de grand diamètre, les moyens de rampes de pédale étant positionnés en conséquence : la plaque 4 est, par exemple, rectangulaire, ainsi que l'aimant 31. Selon cette variante également, la couronne 11, si elle est métallique, a une section en forme de U dont le fond est sur certaines de ses portions embouti de façon à ménager des plans inclinés constituant les rampes de chaussure.

Dans les variantes qui viennent d'être décrites à propos des figures 2 à 5, les moyens de rampes sont constitués par des rampes complémentaires portées par la chaussure et par la pédale ; on comprendra que le but recherché peut être également obtenu si l'un des deux organes seulement, constitués par la chaussure et la pédale, porte des rampes, lesquelles coopèrent avec un moyen suiveur de rampes porté par l'autre organe ; les rampes 25 de la pédale 20 peuvent par exemple coopérer chacune avec le bord d'une ouverture ménagée dans la plaque 4 de protection solidaire de la chaussure 2 ; bien entendu, si une couronne circulaire 11, indépendante de la plaque 4, est prévue, c'est cette couronne qui porte les ouvertures.

Il va de soi que tout ce qui a été décrit précédemment, et tout ce qui suit, à propos de la chaussure, d'une part, et de la pédale, d'autre part, peut être inversé, c'est-à-dire que ce qui concerne la chaussure peut être prévu sur la pédale, et réciproquement.

Les moyens magnétiques, portés par l'un ou l'autre des deux organes que sont la chaussure et la pédale, ont été décrits jusqu'ici comme étant constitués d'un amant, de forme quelconque : selon un disque circulaire, de forme carrée, rectangulaire, polygonale. Ils peuvent également être constitués d'une pluralité d'aimants 32 : pastilles élémentaires (figure 7), bâtonnets élémentaires (figure 8) ; lorsque cette pluralité d'amants est portée par la chaussure, ils sont avantageusement disposés en sorte que subsistent des bandes 132 sans amant, lesdites bandes, parallèles, s'étendant perpendiculairement au sens de la marche ; ceci, visible sur les figures 7 et 8, permet de doter la semelle de la chaussure d'une flexibilité rendant la marche sur le sol plus confortable.

Selon la variante schématisée à la figure 9, les amants 131 de chaussure sont d'une même polarité et les moyens métalliques 140 de pédale ne sont qu'au droit des aimants 131 en position de fixation ; ainsi, après rotation d'un angle correspondant aux secteurs embrassés par les aimants 131 et les moyens métalliques 140, il n'y a ni attraction ni répulsion et la chaussure est alors dégagée facilement de la pédale ; sur la figure 9, ladite rotation n'est pas achevée mais est partielle et la force d'attraction est déjà réduite.

On a vu que, lorsque l'on utilise des amants obtenus par frittage, qui ont une forte induction rémanente et un fort champ coercitif, il est nécessaire, du fait de leur fragilité, de prévoir une plaque de protection métallique ; cette plaque de protection n'est pas nécessaire lorsque les aimants sont du type métallique ; notamment dans ce dernier cas, il peut être utile de prévoir une plaque métallique de fermeture du champ magnétique en vue d'une optimisation magnétique ; ainsi, selon la figure 6, les moyens magnétiques 30 sont disposés entre les moyens métalliques 40 ayant la forme de la coupelle 28 précédemment décrite et une plaque de fermeture 41 ; selon cette variante, la plaque 41 est solidaire de la couronne circulaire 11 ; les moyens magnétiques 30 sont représentés solidaires de la plaque 41 portée par la chaussure 2, mais ils pourraient être portés par les moyens métalliques solidaires de la pédale 20.

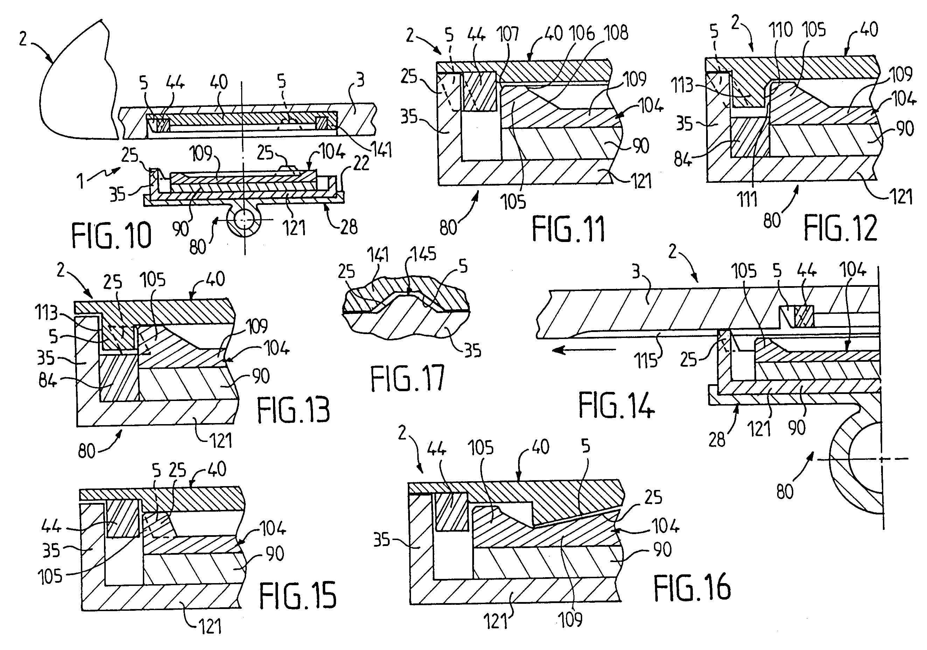

Une variante de ce genre est représentée sur les figures 10 et 11 ; selon cette variante, la semelle 3 de la chaussure 2 porte des moyens métalliques 40 en forme de plaque de section circulaire ayant à la périphérie une jupe cylindrique 141 dans laquelle sont taillés des moyens de rampes 5 en forme générale de U ouvert vers l'extérieur et dont les ailes sont inclinées pour constituer les rampes proprement dites comme le montre la figure 17 ; selon l'exemple représenté, il y a trois moyens de rampes 5 décalés à cent vingt degrés, dont un placé sur l'axe longitudinal de la semelle 3, à l'avant de celle-ci. La pédale 80 comporte une coupelle 28 en matériau amagnétique, tel qu'une matière plastique ou un alliage léger, qui, munie d'un rebord 22, supporte, par exemple par surmoulage, une plaque métallique magnétique 121 également circulaire ayant un rebord 35 sur lequel sont prévus les moyens de rampes 25, complémentaires des moyens de rampes 5. Bien entendu, en variante, non représentée, la coupelle 28 en matériau amagnétique pourrait être supprimée, l'axe de la pédale 80 étant porté directement par la plaque métallique 121. Un aimant 90 en forme de pastille est assujetti, par exemple par collage, à la plaque métallique 121, au centre de celle-ci ; comme cela a été évoqué précédemment à propos des amants réalisés par frittage, l'amant 90 est protégé par une plaque métallique 104, maintenue solidaire de l'aimant 90, par exemple par collage ; il est possible également de solidariser autrement l'ensemble plaque métallique 104 - aimant 90 - plaque métallique 121, par exemple par rivetage, sertissage, surmoulage ou autre ; selon cette variante des figures 10 et 11, la plaque 104 est agencée en forme de pièce polaire : cette pièce polaire 104, mieux visible sur la figure 11, comprend une partie plane 109 en forme de disque qui se prolonge périphériquement selon une corne polaire 105 annulaire de révolution dont les bords d'extrémité sont chanfreinés en 107 et 106, le chanfrein intérieur 106 étant raccordé au disque 109 par une paroi tronconique 108 ; par rapport aux variantes décrites jusqu'ici, celle-ci présente un grand avantage sur le plan magnétique le dispositif de liaison pouvant être, pour un même effort d'attraction désiré, d'encombrement plus réduit : en effet, les lignes de force magnétique se ferment depuis l'aimant 90, à travers la corne polaire 105, les moyens métalliques 40, les moyens de rampes 5, 25 et à nouveau l'amant 90 par la plaque métallique 121 et son rebord 35 ; un jeu radial existe entre l'amant 90 et le rebord 35 de la plaque métallique 121 ; tel que cela est représenté, la plaque métallique 121 et les moyens métalliques 40 sont en contact tandis qu'un faible entrefer est prévu entre la corne polaire 105 et les moyens métalliques 40 ; on sait que l'effort d'attraction dû à l'amant est, toutes choses égales par ailleurs, d'autant plus grand qu'il y a très peu, voir pas du tout, d'entrefer, mais une construction sans entrefer nécessiterait une grande précision, dans la réalisation des pièces, qui grèverait le prix de revient de l'ensemble ; c'est pourquoi il a été choisi d'admettre un entrefer volontairement au droit de la corne polaire 105, et d'assurer le contact au droit du rebord 35 qui est situé sur un plus grand rayon que celui qui correspond à la corne polaire 105, c'est-à-dire que le rebord 35 de la plaque métallique 121 est au contact de la jupe cylindrique 141 des moyens métalliques 40, les rampes 5 et 25 étant axialement à une distance l'une de l'autre au plus égale à l'entrefer ci-dessus placé au droit de la corne polaire 105, comme cela est visible sur la figure 17 ; à titre d'exemple, pour un amant Fer-Néodyme-Bore de 3 mm d'épaisseur et de 35 mm de diamètre, une plaque métallique 121 de 46 mm de diamètre, en tôle magnétique de 2 mm d'épaisseur, une corne polaire 105 dont l'extrémité a une longueur radiale de 2,5 mm, et un entrefer d'environ 1,5 mm, la fixation entre la chaussure 2 et la pédale 80 correspond à un effort axial supérieur à 20 kg.

Sur leur face tournée vers l'extérieur, les moyens métalliques 40 de la chaussure 2 portent une rondelle 44 en matériau amagnétique, par exemple en matière plastique ou en métal amagnétique, dont l'épaisseur mesurée radialement est légèrement inférieure au jeu radial existant entre l'aimant 90 et la plaque 104, d'une part, et le rebord 35 de la plaque métallique 121, d'autre part, ceci permettant à la rondelle 44 de prendre place dans ledit jeu lorsque la chaussure 2 et la pédale 80 sont assemblées, comme le montre la figure 11 ; la rondelle 44, solidarisée aux moyens métalliques 40 par exemple par collage, constitue un moyen de guidage de la chaussure 2 pour la préhension de la pédale 80 : en effet, pour cette préhension, le déplacement de la chaussure 2 est effectué vers la pédale 80, de la droite vers la gauche par rapport aux figures 10 et 11 ; lors de ce déplacement, les moyens de rampes 325 à l'arrière de la pédale 80, qui, dans l'exemple représenté, sont en proéminence par rapport à la plaque 104 tandis que les moyens de rampes 5 sont en creux, constituent des plots de guidage pour la périphérie extérieure de la rondelle 44 qui est ainsi amenée à être centrée transversalement par rapport à la pédale ; un centrage analogue est obtenu si, en variante, les moyens de rampes 25 sont en creux tandis que les moyens de rampes 5 sont proéminents, la rondelle 44 étant en ce cas portée par la pédale 80.

Ce centrage longitudinal peut être préalablement amorcé en guidant les moyens de rampes 25 placés en tête de la pédale 80 dans une rainure 115 longitudinale ménagée à la surface de la semelle 3 de la chaussure 2, comme le montre la figure 14 sur laquelle la flèche indique le sens de déplacement de la chaussure 2 par rapport à la pédale 80 lors de la préhension de celle-ci.

Un tel guidage peut être complété par un centrage des pièces circulaires que sont les moyens métalliques 40 de chaussure et la plaque 104 de pédale : selon la variante de la figure 12, les moyens métalliques 40 présentent une jupe intérieure 113 dont la paroi intérieure 110 de révolution est légèrement conique comme l'est également, de façon complémentaire, la paroi extérieure 111 de révolution de la plaque 104 ; bien entendu, la jupe intérieure 113 des moyens métalliques 40 pourrait être remplacée par une rondelle en matériau amagnétique analogue à la rondelle 44 de la figure 12, auquel cas c'est cette rondelle amagnétique qui a une paroi intérieure de révolution légèrement conique telle que la paroi 110. Cette variante de la figure 12 montre également qu'il est possible de disposer une rondelle annulaire 84 en matériau amagnétique, comme une matière plastique par exemple, entre l'amant 90 et le rebord 35 : une telle rondelle 84 permet de centrer l'amant 90 dans la plaque métallique 121 durant le collage de l'amant 90.

Jusqu'ici, comme on l'a vu, les moyens de rampes 5, 25 ont été prévus à la périphérie des moyens métalliques 40 et du rebord 35 de la plaque 121 ; il est possible de les disposer autrement radialement ; ainsi, selon la figure 13, c'est la rondelle 84 de centrage de l'amant 90 qui porte les moyens de rampes 25 de pédale, tandis que les moyens de rampes 5 de chaussure sont portés par la jupe intérieure 113 de la plaque 40 disposée radialement au droit de la rondelle 84 ; bien entendu, ici aussi, comme cela a été dit à propos de la figure 12, la jupe intérieure 113 pourrait être remplacée par une rondelle en matériau amagnétique analogue à la rondelle 44 de la figure 10, auquel cas c'est cette rondelle amagnétique qui porte les moyens de rampes 5 de chaussure ; selon la variante de la figure 13, l'entrefer est nul entre la pièce polaire 105 et les moyens métalliques 40 tandis qu'un entrefer non nul est prévu entre les moyens métalliques 40 et le rebord 35 de la plaque métallique 121 ; selon la figure 15, les moyens de rampes 5, 25 sont au droit de la corne polaire 105 ; selon la figure 16, les moyens de rampes 5, 25 sont en position centrale : la plaque 109 est conformée à sa partie supérieure centrale, entourée par la corne polaire 105, selon une surface conique ondulée 25 constituant les moyens de rampes de pédale, la face intérieure centrale 5 des moyens métalliques 40 ayant une forme conique ondulée complémentaire pour constituer les moyens de rampes de chaussure.

Dans le but de faciliter l'approche de la chaussure vers la pédale dans la position correcte où les moyens de rampes des deux organes sont centrés, un auto-centrage magnétique peut être prévu en disposant par exemple annulairement les moyens magnétiques et les moyens métalliques ; ainsi, en variante non représentée, un amant annulaire est porté par la pédale et une plaque de fermeture également annulaire est portée par la chaussure.

Ainsi, comme on l'a vu, les moyens de rampes peuvent faire partie, ou non, du circuit magnétique ; ils peuvent être placés sur un grand diamètre en entourant le circuit magnétique ; prévus avantageusement symétriques circonférentiellement, ils permettent non seulement d'éviter d'avoir à spécialiser un dispositif de liaison côté gauche ou côté droit mais également à tout utilisateur de déconnecter les deux organes dans n'importe quel sens, à sa convenance, et en même temps de définir un (ou des) ergot(s) constitué(s) par la partie supérieure 145 (figure 17) des moyens de rampes mâles pour le guidage des organes lors de leur mise en oeuvre ; le nombre de moyens de rampes peut être quelconque, par exemple deux, disposés diamétralement opposés, selon l'axe de pédale, mais on préfère au moins trois moyens de rampes pour une désolidarisation encore mieux maîtrisée des deux organes qui, lors de cette opération, se déplacent de ce fait parallèlement l'un par rapport à l'autre, l'entrefer croissant de manière uniformément réparti circonférentiellement ; bien entendu, lorsque deux moyens de rampes sont prévus, les ergots qu'ils définissent coopèrent dès lors avec deux rainures de guidage prévues dans la semelle de chaussure, ou avec les flancs d'un même bossage longitudinal ; le profil des rampes peut être également quelconque, par exemple droit ou en profil d'engrenages : l'expérience a montré qu'une désolidarisation après une rotation relative des deux organes d'un angle de l'ordre d'une dizaine de degrés convient bien.

## Revendications

1. Dispositif de fixation d'une chaussure (2) à une pédale (20, 80) comportant, d'une part, des moyens magnétiques (30, 90) destinés à être solidarisés à l'un des deux organes constitués par la chaussure (2) et la pédale (20, 80), et des moyens métalliques (40) destinés à être solidarisés à l'autre des deux dits organes et à coopérer magnétiquement avec lesdits moyens magnétiques en vue de fixer magnétiquement la chaussure à la pédale, et, d'autre part, des moyens d'éloignement capables de provoquer l'éloignement d'un desdits organes par rapport à l'autre dans le sens d'une augmentation de l'entrefer magnétique, caractérisé par le fait que lesdits moyens d'éloignement sont des moyens de rampes (5, 25) s'étendant circonférentiellement, destinés à être portés par l'un au moins desdits organes et placés de telle sorte qu'une rotation relative desdits organes (2, 20, 80) provoque ledit éloignement.

2. Dispositif de fixation selon la revendication 1, caractérisé par le fait que des moyens de butée longitudinale et/ou transversale sont prévus entre la chaussure (2) et la pédale (20, 80).

3. Dispositif de fixation selon l'une des revendications 1 et 2, caractérisé par le fait que les moyens magnétiques (30) sont portés par la chaussure (2).

4. Dispositif de fixation selon l'une des revendications 1 et 2, caractérisé par le fait que les moyens magnétiques (90) sont portés par la pédale (80).

5. Dispositif de fixation selon l'une des revendications 1 à 4, caractérisé par le fait qu'une plaque de protection (4, 104) recouvre les moyens magnétiques (30, 90).

6. Dispositif de fixation selon l'une des revendications 1 à 5, caractérisé par le fait que des rampes (5, 25) de formes complémentaires sont solidaires de la chaussure (2) et de la pédale (20, 80).

7. Dispositif de fixation selon l'une des revendications 1 à 6, caractérisé par le fait que la pédale (20, 80) comprend une plaque métallique (21, 121).

8. Dispositif de fixation selon la revendication 7, caractérisé par le fait que la plaque métallique (21, 121) recouvre le fond d'une coupelle (28), ayant un bord cylindrique (22).

9. Dispositif de fixation selon l'une des revendications 1 à 7, caractérisé par le fait que les moyens de rampes (5, 25) sont indépendants du circuit magnétique.

10. Dispositif de fixation selon la revendication 8, caractérisé par le fait que le bord cylindrique (22) présente les rampes (25) complémentaires des rampes (5) portées par la chaussure (2).

11. Dispositif de fixation selon l'une des revendications 1 à 10, caractérisé par le fait qu'un jeu circonférentiel existe entre les rampes complémentaires (5, 25).

12. Dispositif de fixation selon la revendication 7, caractérisé par le fait que la plaque métallique (21, 121) est solidaire d'un fourreau (23) destiné à recevoir un axe de pédale.

13. Dispositif de fixation selon la revendication 7, caractérisé par le fait que la plaque métallique (121) est en forme de coupelle ayant un rebord cylindrique (35) portant les moyens de rampes (25).

14. Dispositif de fixation selon l'une des revendications 5 à 13, caractérisé par le fait que la plaque de protection (104) est conformée en pièce polaire.

15. Dispositif de fixation selon la revendication 14, caractérisé par le fait que la pièce polaire (104) est munie de chanfreins (106, 107).

16. Dispositif de fixation selon l'une des revendications 1 à 15, caractérisé par le fait qu'un anneau amagnétique (84) entoure l'amant (90).

17. Dispositif de fixation selon les revendications 9 et 16, caractérisé par le fait que les moyens de rampes (25) sont portés par l'anneau amagnétique (84).

18. Dispositif de fixation selon la revendication 14, caractérisé par le fait que les moyens de rampes (25) sont portés par la pièce polaire (104).

19. Dispositif de fixation selon l'une des revendications 1 à 18, caractérisé par le fait que la semelle de la chaussure (2) présente un élément (115) de guidage.

20. Dispositif de fixation selon l'une des revendications 1 à 19, caractérisé par le fait que les moyens magnétiques portés par l'un des organes sont constitués d'une pluralité (32) d'amants disposés parallèlement à l'axe transversal.

21. Dispositif de fixation selon l'une des revendications 1 à 19, caractérisé par le fait que les moyens magnétiques (131) sont décalés circonférentiellement ainsi que les moyens métalliques (140) qui leur font face.

22. Chaussure destinée à être fixée à une pédale par l'intermédiaire d'un dispositif de fixation porté par la chaussure et la pédale, caractérisée par le fait que le dispositif de fixation est selon l'une des revendications 1 à 21.

23. Pédale sur laquelle une chaussure est amenée à être fixée par l'intermédiaire d'un dispositif de fixation porté par la chaussure et la pédale, caractérisée par le fait que le dispositif de fixation est selon l'une des revendications 1 à 21.

## Claims

1. Fastening device for fixing a shoe (2) to a pedal (20, 80) comprising, firstly, magnetic means (30, 90) to be attached to one of two members constituting the shoe (2) and the pedal (20, 80), and metallic means (40) to be attached to the other of said two members and to cooperate magnetically with said magnetic means for magnetically fastening the shoe (2) to the pedal (20, 80) and, secondly, displacement means capable of the displacement of the shoe and the pedal away from each other in a direction so as to increase the magnetic airgap, characterised in that said displacement means are circumferential ramp means (5, 25) to be carried by at least one of said members (2, 20, 80) and such located that relative rotation of said members (2, 20, 80) causes such displacement.

2. Fastening device according to claim 1 characterised in that longitudinal and/or transverse abutment means are provided between the shoe (2) and the pedal (20, 80).

3. Fastening device according to claim 1 or claim 2 characterised in that the magnetic means (30) are carried by the shoe (2).

4. Fastening device according to claim 1 or claim 2 characterised in that the magnetic means (90) are carried by the pedal (80).

5. Fastening device according to any one of claims 1 to 4 characterised in that the magnetic means (30, 90) are covered by a protective plate (4, 104).

6. Fastening device according to any one of claims 1 to 5 characterised in that complementary shaped ramps (5, 25) are attached to the shoe (2) and the pedal (20, 80).

7. Fastening device according to any one of claims 1 to 6 characterised in that the pedal (20, 80) comprises a metal plate (21, 121).

8. Fastening device according to claim 7 characterised in that the metal plate (21, 121) covers the bottom of a cup (28) having a cylindrical edge (22).

9. Fastening device according to any one of claims 1 to 7 characterised in that the ramp means (5, 25) are independent of the magnetic circuit.

10. Fastening device according to claim 8 characterised in that the cylindrical edge (22) has ramps (25) complementary to ramps (5) carried by the shoe (2) .

11. Fastening device according to any one of claims 1 to 10 characterised in that there is circumferential clearance between the complementary ramps (5, 25).

12. Fastening device according to claim 7 characterised in that the metal plate (21, 121) is attached to a bush (23) adapted to receive a pedal spindle.

13. Fastening device according to claim 7 characterised in the metal plate (121) is in the form of a cup having a cylindrical rim (35) carrying the ramp means (25).

14. Fastening device according to any one of claims 5 to 13 characterised in that the protective plate (104) is polepiece shaped.

15. Fastening device according to claims 14 characterised in that the polepiece (104) has bevels (106, 107).

16. Fastening device according to any one of claims 1 to 15 characterised in that an amagnetic ring (84) surrounds the magnet (90).

17. Fastening device according to claims 9 and 16 characterised in that the ramp means (25) are carried by the magnetic ring (84).

18. Fastening device according to claim 14 characterised in that the ramp means (25) are carried by the polepiece (104).

19. Fastening device accord to any one of claims 1 to 18 characterised in that the sole of the shoe (2) has guide member (115).

20. Fastening device according to any one of claims 1 to 19 characterised in that the magnetic means carried by one of said organs (2, 20, 80) comprise a plurality or magnets (32) disposed parallel to the transverse axis.

21. Fastening device according to any one of claims 1 to 19 characterised in that the magnetic means (131) and the metallic means (140) facing them are offset circumferentially.

22. Shoe to be fastened to a pedal by means of a fastening device carried by the shoe and the pedal characterised in that the fastening device is according to any one of claims 1 to 21.

23. Pedal to which a shoe can be fastened by means of a fastening device carried by the shoe and the pedal characterised in that the fastening device is according to any one of claims 1 to 21.

## Patentansprüche

1. Befestigungsvorrichtung von einem Schuh (2) an einem Pedal (20,80), welche umfaßt einerseits eine magnetische Einrichtung (30,90), welche bestimmt ist mit einem der zwei Organe einstückig zu sein, welche aus dem Schuh (2) und dem Pedal (20,80) gebildet sind, und eine metallische Einrichtung (40), welche bestimmt ist, mit dem anderen der zwei Organe einstückig zu sein und welche magnetisch mit der magnetischen Einrichtung zusammen- bzw. wechselwirkt, um den Schuh an dem Pedal magnetisch zu befestigen, und andererseits eine Entfernungseinrichtung, welche die Entfernung bzw. Trennung von einem der Organe bezüglich des anderen Organs verursachen kann, und zwar im Sinne bzw. bezüglich einer Erhöhung des magnetischen Luft- bzw. Eisenspaltes bzw. des Spaltes, dadurch gekennzeichnet, daß die Entfernungseinrichtung eine Schrägen- bzw. Rampeneinrichtung (5,25) ist, welche sich umfänglich erstreckt, und bestimmt ist, durch zumindest einen der Organe getragen und derart angeordnet zu werden, daß eine relative Drehung der Organe (2,20,80), die Entfernung verursacht.

2. Festigungsvorrichtung gemäß Anspruch 1, dadurch gekennzeichnet, daß eine Anschlagseinrichtung in Längs- und/oder Querrichtung zwischen dem Schuh (2) und dem Pedal (20,80) vorgesehen ist.

3. Befestigungsvorrichtung gemäß einem der Ansprüche 1 und 2, dadurch gekennzeichnet, daß die magnetische Einrichtung (30) durch den Schuh (2) getragen ist.

4. Befestigungsvorrichtung gemäß einem der Ansprüche 1 und 2, dadurch gekennzeichnet, daß die magnetische Einrichtung (90) durch das Pedal (80) getragen ist.

5. Befestigungsvorrichtung gemäß einem der Ansprüche 1 bis 4, dadurch gekennzeichnet, daß eine Schutzplatte (4,104) die magnetische Einrichtung (30,90) abdeckt.

6. Befestigungsvorrichtung gemäß einem der Ansprüche 1 bis 5, dadurch gekennzeichnet, daß die Rampen (5,25) mit komplementären Formen bzw. Ausgestaltungen mit dem Schuh (2) und dem Pedal (20,80) einstückig sind.

7. Befestigungsvorrichtung gemäß einem der Ansprüche 1 bis 6, dadurch gekennzeichnet, daß das Pedal (20,80) eine Metallplatte (21,121) aufweist.

8. Befestigungsvorrichtung gemäß Anspruch 7, dadurch gekennzeichnet, daß die Metallplatte (21,121) den Boden einer Schale bzw. Rücksprung (28) bedeckt, welche einen zylindrischen Rand (22) aufweist.

9. Befestigungsvorrichtung gemäß einem der Ansprüche 1 bis 7, dadurch gekennzeichnet, daß die Rampeneinrichtung (5,25) von der magnetischen Schaltung unabhängig ist.

10. Befestigungsvorrichtung gemäß Anspruch 8, dadurch gekennzeichnet, daß der zylindrische Rand die Rampen (25) aufweist, welche komlementär sind zu den Rampen (5) welche durch den Schuh (2) getragen sind.

11. Befestigungsvorrichtung gemäß einem der Ansprüche 1 bis 10, dadurch gekennzeichnet, daß ein umfängliches Spiel zwischen den komplementären Rampen (5,25) existiert.

12. Befestigungsvorrichtung gemäß Anspruch 7, dadurch gekennzeichnet, daß die Metallplatte (21,121) mit einer Manschette bzw. Hülse (23) einstückig ist, welche zur Aufnahme einer Achse der Pedale bestimmt ist.

13. Befestigungsvorrichtung gemäß Anspruch 7, dadurch gekennzeichnet, daß die Metallplatte (21,121) die Form einer Schale aufweist, welche einen zylindrischen Rand bzw. Einfassung (35) hat, welcher die Rampeneinrichtung (25) trägt.

14. Befestigungsvorrichtung gemäß einem der Ansprüche 5 bis 13, dadurch gekennzeichnet, daß die Schutzplatte (104) als ein polares Stück bzw. Polanschluß gebildet ist.

15. Befestigungsvorrichtung gemäß Anspruch 14, dadurch gekennzeichnet, daß das polare Stück (104) mit Keilschrägungen (106, 107) versehen ist.

16. Befestigungsvorrichtung gemäß einem der Ansprüche 1 bis 15, dadurch gekennzeichnet, daß ein amagnetischer Ring (84) den Magneten (90) umgibt.

17. Befestigungsvorrichtung gemäß den Ansprüchen 9 und 16, dadurch gekennzeichnet, daß die Rampeneinrichtung (25) durch den amagnetischen Ring (84) getragen ist.

18. Befestigungsvorrichtung gemäß Anspruch 14, dadurch gekennzeichnet, daß die Rampeneinrichtung (25) durch das polare Stück (104) getragen ist.

19. Befestigungsvorrichtung gemäß einem der Ansprüche 1 bis 18, dadurch gekennzeichnet daß die Sohle des Schuhs (2) ein Führungselement (115) aufweist.

20. Befestigungsvorrichtung gemäß einem der Ansprüche 1 bis 19, dadurch gekennzeichnet, daß die magnetische Einrichtung, welche durch einen der Organe getragen ist, durch eine Vielzahl (32) von Magneten gebildet ist, welche parallel zu der transversalen Achse bzw. Querachse angeordnet sind.

21. Befestigungsvorrichtung gemäß einem der Ansprüche 1 bis 19, dadurch gekennzeichnet, daß die magnetische Einrichtung (131) umfänglich versetzt ist, und zwar wie die Metalleinrichtung (140), welche ihr gegenüberliegt.

22. Schuh, welcher bestimmt ist, mittels einer Befestigungseinrichtung an einem Pedal befestigt zu sein, welche durch den Schuh und das Pedal getragen ist, dadurch gekennzeichnet, daß die Befestigungsvorrichtung gemäß einem der Ansprüche 1 bis 21 ausgebildet ist.

23. Pedal, an welchem ein Schuh befestigt werden soll mittels einer Befestigungsvorrichtung, welche durch den Schuh und das Pedal getragen ist, dadurch gekennzeichnet, daß die Befestigungsvorrichtung gemäß einem der Ansprüche 1 bis 21 ausgebildet ist.
